# EUROPÄISCHE PATENTSCHRIFT

(11) **EP 4 415 849 B1**
(45) Veröffentlichungstag und Bekanntmachung des Hinweises auf die Patenterteilung: **03.12.2025**
(21) Anmeldenummer: 22785757.0
(22) Anmeldetag: 04.10.2022
(51) Int. Cl.: B01D 21/01, B01D 21/30, C02F 1/28, C02F 1/32, C02F 1/52, C02F 9/00, C02F 11/123, B01D 29/09, B01D 29/60, B01D 29/90, C02F 1/00, E01H 1/00

(54) **MOBILE ABWASSERAUFBEREITUNGSVORRICHTUNG**
MOBILE WASTEWATER TREATMENT APPARATUS
APPAREIL MOBILE DE TRAITEMENT D'EAUX USÉES

(30) Priorität: 12.10.2021 AT 508152021
(43) Veröffentlichungstag der Anmeldung: 21.08.2024
(73) Patentinhaber: Reprotex GmbH, 4020 Linz (AT)
(72) Erfinder: MAYRHOFER, Erich, 4020 Linz (AT); MAYERHOFER, Gerhard, 4060 Leonding (AT)
(74) Vertreter: KLIMENT & HENHAPEL
(86) Internationale Anmeldenummer: PCT/EP2022/077552
(87) Internationale Veröffentlichungsnummer: WO 2023/061802

(56) Entgegenhaltungen:
- WO-A1-2018/127327
- CN-U- 208 244 180
- DE-A1- 3 628 786
- GB-A- 2 252 058

## Beschreibung

Die Erfindung betrifft eine mobile Abwasseraufbereitungsvorrichtung mit einem als Vorlagebehälter ausgeführten Schmutzwasserbehälter für aufzubereitendes Schmutzwasser, einer als erstes Modul ausgeführten Aufbereitungseinheit für das Schmutzwasser, die eine Flockungsstufe und eine der Flockungsstufe nachgeordnete Sedimentationsstufe umfasst, und einen Klarwasserbehälter für das aufbereitete Klarwasser, wobei der Vorlagebehälter über eine mit einer Tauchpumpe versehene Zufuhrleitung zur Zufuhr des Schmutzwassers mit der Aufbereitungseinheit verbunden ist, und die Aufbereitungseinheit über eine Rückführungsleitung zur Rückführung von aufbereitetem Klarwasser mit dem Klarwasserbehälter verbunden ist, gemäß dem Oberbegriff von Anspruch 1.

Eine gattungsgemäße Vorrichtung wurde in der DE 36 28 786 A beschrieben. Weitere Vorrichtungen zur Abwasserreinigung wurden in der CN 208 244 180 U und der WO 2018/127327 A beschrieben. Eine weitere Vorrichtung wurde im österreichischen Patent AT 518 651 B1 sowie im korrespondierenden europäischen Patent EP 3 565 927 B1 beschrieben. Vorrichtungen der genannten Art werden insbesondere zur Reinigung von Schmutzwasser verwendet, das bei der Anwendung von Hochdruckpumpen beispielsweise zur Tunnelreinigung, zur Schiffsentlackung, oder auch in der Gebäude- und Brückensanierung anfällt. Hierbei wird Klarwasser unter hohem Druck gegen die zu bearbeitende Fläche, beispielsweise eine Tunnelinnenwand, gesprüht. Dabei sind große Mengen an Prozesswasser erforderlich, die am Einsatzort zumeist nicht verfügbar sind und daher mitgeführt werden müssen. Andererseits bereitet auch die Entsorgung der Prozessabwässer große Schwierigkeiten, da das mitunter stark verunreinigte Schmutzwasser gesammelt und abtransportiert werden muss, was zumeist über Tanklastwagen erfolgt, um es fern des Einsatzortes einer fachgerechten Aufbereitung zuzuführen.

Daher wurde in den eingangs erwähnten Druckschriften AT 518 651 B1 und EP 3 565 927 B1 eine mobile Abwasseraufbereitungsvorrichtung mit einem als Vorlagebehälter ausgeführten Schmutzwasserbehälter für aufzubereitendes

Schmutzwasser, sowie einer Aufbereitungseinheit für das Schmutzwasser vorgeschlagen, die eine Flockungsstufe und eine der Flockungsstufe nachgeordnete Sedimentationsstufe umfasst. Die beschriebene Vorrichtung sieht dabei nicht nur die Sammlung und Aufbereitung von Schmutzwasser vor, sondern auch dessen Wiederverwendung für die Hochdruckpumpen. Die Wiederverwendung von Schmutzwasser für Hochdruckpumpen ist durchaus schwierig zu bewerkstelligen, da das Schmutzwasser beispielsweise einer Tunnelreinigung problematische Verunreinigungen wie Betonschlämme, Bitumen, Lacke oder Kunststoffe enthalten kann, die schwer aufzubereiten sind und Dichtungen und Ventile der verwendeten Hochdruckpumpen und - düsen beschädigen können. Die Aufbereitung eines solchen Schmutzwassers ist bereits unter einfachen Bedingungen schwierig und erscheint insbesondere unter den beschränkten Platzverhältnissen vieler Einsatzorte kaum möglich, zudem die Aufbereitung in einer zur Wiederverwendung mit Hochdruckpumpen und -düsen ausreichenden Qualität erfolgen muss. Dennoch kann die Wiederverwendung von Schmutzwasser gemäß der technischen Lehre der eingangs erwähnten Druckschriften AT 518 651 B1 und EP 3 565 927 B1 bewerkstelligt werden, wobei insbesondere eine Aufbereitungseinheit mit einer Flockungsstufe und einer der Flockungsstufe nachgeordneten Sedimentationsstufe beschrieben wird. Das Überlaufwasser der der Flockungsstufe nachgeordneten Sedimentationsstufe verfügt über eine erforderliche Reinheit, um als Prozesswasser beispielsweise für Hochdruckpumpen wiederverwendet werden zu können. Damit können 90% des anfallenden Schmutzwassers als Klarwasser wiederverwendet werden, und die verbleibenden 10% können als ungefährlicher Flüssigschlamm entsorgt oder für eine spätere Entsorgung gesammelt werden.

Es wäre ausgehend von diesem nächstliegenden Stand der Technik wünschenswert, auch für diesen Flüssigschlamm eine Möglichkeit der Aufbereitung zu schaffen, um den Wasseranteil als wiederverwendbares Klarwasser rückzugewinnen und die Menge der zu entsorgenden Reststoffe weiter zu minimieren. Eine solche Aufbereitung soll dabei nach einer anfänglichen Konfigurierung für ein konkretes Aufbereitungsproblem autonom arbeiten, da am Einsatzort zumeist kein in der Aufbereitungstechnik geschultes Personal verfügbar ist, insbesondere wenn der Einsatzort in Entwicklungsländern liegt. Eine autonom arbeitende Aufbereitung von Flüssigschlamm wird aber insbesondere durch den variierenden Schlammanteil erschwert, der auch bei einem bekannten Aufbereitungsproblem nach anfänglicher Konfigurierung der Anlage während des Einsatzes auftreten kann.

Es besteht daher das Ziel der Erfindung in der Bereitstellung einer Vorrichtung zur Aufbereitung von Flüssigschlamm, die in eine gattungsgemäße Vorrichtung integrierbar ist und nach einer anfänglichen Konfigurierung und Installierung am Einsatzort autonom eine Schlammentwässerung vornimmt, ohne dass es dabei abgesehen von einem Ein- und Ausschalten der Vorrichtung eines externen Eingriffs zur Steuerung oder Regelung der Anlage durch Bedienpersonal bedarf.

Dieses Ziel wird durch die Merkmale von Anspruch 1 erreicht. Anspruch 1 bezieht sich auf eine mobile Abwasseraufbereitungsvorrichtung mit einem als Vorlagebehälter ausgeführten Schmutzwasserbehälter für aufzubereitendes Schmutzwasser, einer als erstes Modul ausgeführten Aufbereitungseinheit für das Schmutzwasser, die eine Flockungsstufe und eine der Flockungsstufe nachgeordnete Sedimentationsstufe umfasst, und einen Klarwasserbehälter für das aufbereitete Klarwasser, wobei der Vorlagebehälter über eine mit einer Tauchpumpe versehene Zufuhrleitung zur Zufuhr des Schmutzwassers mit der Aufbereitungseinheit verbunden ist, und die Aufbereitungseinheit über eine Rückführungsleitung zur Rückführung von aufbereitetem Klarwasser mit dem Klarwasserbehälter verbunden ist. Erfindungsgemäß wird hierbei vorgeschlagen, dass eine als zweites Modul ausgeführte Schlammentwässerungseinheit vorgesehen ist, die einen Bandfilter zur Abtrennung von Schlamm sowie einen Filtrataufnahmebehälter für das Filtrat des Bandfilters umfasst, und die einen ersten Anschluss für eine mit einer Schlammaustragpumpe der Sedimentationsstufe der Aufbereitungseinheit verbindbare Schlammleitung aufweist, sowie einen zweiten Anschluss für eine mit einem Überlauf der Sedimentationsstufe der Aufbereitungseinheit verbindbare Filtratleitung, sowie einen elektrischen Anschluss für eine mit der Stromversorgung der Tauchpumpe des Vorlagebehälters verbindbare elektrische Leitung, wobei der Filtrataufnahmebehälter mit Füllstandssensoren zur Überwachung eines untersten, eines mittleren und eines obersten Füllstandes im Filtrataufnahmebehälter versehen ist, mit denen eine im Filtrataufnahmebehälter angeordnete und mit dem zweiten Anschluss verbundene Filtratpumpe bei Unterschreiten des untersten Füllstandes ausschaltbar ist und bei Überschreiten des mittleren Füllstandes einschaltbar ist, und mit denen bei Überschreiten eines obersten Füllstandes die Stromversorgung der Tauchpumpe ausschaltbar sowie bei Unterschreiten des untersten Füllstandes die Stromversorgung der Tauchpumpe einschaltbar ist.

Die Erfindung sieht somit eine modulare Ausführung sowohl der Aufbereitungseinheit als auch der Schlammentwässerungseinheit vor. Das hat den praktischen Vorteil, dass bei Anwendungen, die einer Schlammentwässerung bedürfen, die Schlammentwässerungseinheit einfach an die an sich bekannte Aufbereitungseinheit gekoppelt werden kann, indem der erste und der zweite Anschluss sowie der elektrische Anschluss als einfache Schnittstellen verwendet werden. Die Schlammaustragpumpe der Sedimentationsstufe der Aufbereitungseinheit pumpt ohne Verwendung einer Schlammentwässerungseinheit den Flüssigschlamm in einen Sammelbehälter. Bei Verwendung einer Schlammentwässerungseinheit wird die Schlammaustragpumpe hingegen über eine Schlammleitung mit dem ersten Anschluss verbunden. Die Filtratpumpe wird über den zweiten Anschluss und die Filtratleitung mit dem Überlauf der Sedimentationsstufe der Aufbereitungseinheit verbunden. Die Aufbereitungseinheit muss somit unabhängig von einer allfällig angeschlossenen Schlammentwässerungseinheit apparativ nicht verändert werden. Auch die Steuerung der Aufbereitungseinheit muss nicht verändert werden, da sie üblicher Weise auf dem gemessenen Durchfluss von Schmutzwasser in der Zufuhrleitung beruht, ohne dabei über Kenntnis des genauen Schlammanteils zu verfügen. Die Steuerung der Aufbereitungseinheit ist somit auf das Gesamtvolumen des in die Aufbereitungseinheit gepumpten Schmutzwassers ausgelegt, obwohl ein an sich unbekannter Anteil an Flüssigschlamm von der Schlammaustragpumpe ausgetragen wird. Die Rückführung des Filtrats der Schlammentwässerungseinheit in den Überlauf der Sedimentationsstufe der Aufbereitungseinheit hat somit den Vorteil, dass die Aufbereitungseinheit bei Anschluss einer Schlammentwässerungseinheit näher am Auslegungspunkt und daher effizienter arbeitet.

Die Schlammaustragpumpe arbeitet in der Regel autonom, indem sie sich bei anfallendem Flüssigschlamm selbsttätig einschaltet und bei fehlendem Flüssigschlamm selbsttätig ausschaltet. Auch der erfindungsgemäß vorgesehene Bandfilter arbeitet autonom. Bei einem Bandfilter wird das Schmutzwasser einem bandförmigen Filter zugeführt, wobei Klarwasser als Filtrat durch den bandförmigen Filter tritt und Feststoffe als Filterkuchen auf dem bandförmigen Filter verbleiben. Je nach Ausführung des Bandfilters wird der Filterkuchen entweder kontinuierlich oder nach Überschreiten einer automatisch gemessenen Filterkuchenhöhe entfernt. Das Filtrat wird üblicherweise in einem Reintank gesammelt. Erfindungsgemäß wird das Filtrat hingegen in die Aufbereitungseinheit rückgeführt, wobei die Rückführung autonom vorgenommen werden soll. Hierfür wird erfindungsgemäß vorgeschlagen, dass das Filtrat in einem Filtrataufnahmebehälter gesammelt wird, der mit Füllstandssensoren versehen ist. Mithilfe der Füllstandssensoren wird die Filtratpumpe bei Unterschreiten eines untersten Füllstandes ausgeschaltet und bei Überschreiten eines mittleren Füllstandes eingeschaltet. Durch das Ausschalten wird ein Leerlauf der Filtratpumpe vermieden. Durch das Einschalten wird das Filtrat in die Aufbereitungseinheit gepumpt. Falls unerwartet hohe Mengen an Flüssigschlamm anfallen und in die Schlammentwässerungseinheit gepumpt werden, wird im Interesse einer möglichst einfachen und steuerungstechnisch robusten Ausführung ein dritter Füllstandssensor vorgeschlagen, der bei Überschreiten eines obersten Füllstandes einfach die Stromversorgung der Tauchpumpe ausschaltet und bei Unterschreiten des untersten Füllstandes die Stromversorgung der Tauchpumpe wieder einschaltet. Es sind für diesen Fall daher keine aufwändigen steuerungs- oder regelungstechnischen Maßnahmen vorgesehen, sondern es wird einfach die Stromversorgung der Tauchpumpe in der Zufuhrleitung zur Aufbereitungseinheit unterbrochen. Die Schlammentwässerungseinheit arbeitet somit zuverlässig und autonom.

Diese Maßnahme bietet auch den Vorteil, dass die Tauchpumpe als autonome Tauchpumpe ausgeführt sein kann. Eine autonome Tauchpumpe schaltet sich selbsttätig ein, falls der Pegelstand einer zu pumpenden Flüssigkeit einen Mindestwert überschreitet, und sie schaltet sich selbsttätig aus, falls der Pegelstand den Mindestwert unterschreitet. Durch die oben beschriebene Unterbrechung der Stromversorgung wird die Tauchpumpe auch in einem an sich eingeschalteten Zustand inaktiv. Nach Wiederherstellung der Stromversorgung wird sie wieder aktiv und setzt die Pumptätigkeit fort.

Der Bandfilter ist vorzugsweise als Schrägbettfilter ausgeführt. Ein Schrägbettfilter arbeitet vollautomatisch und besteht aus einem Gehäuse mit einem schräg angeordneten Vlies. Der Flüssigschlamm wird über einen Einlaufverteiler einem Filterraum zugeführt, wo es das Vlies durchfließt. Der Wasseranteil wird als Filtrat in dem darunter liegenden Filtrataufnahmebehälter gesammelt. Infolge des höheren statischen Druckes ist der Flüssigkeitsdurchsatz größer als bei normalen Bandfiltern. Zudem bildet sich ein stärkerer Filterkuchen aus und der Filtervliesverbrauch ist niedriger.

Die Aufbereitungseinheit weist vorzugsweise einen Durchflusszähler für das über die Zufuhrleitung zugeführte und aufzubereitende Schmutzwasser auf, der mit einer Steuerung für die Flockungsstufe verbunden ist. Wie bereits ausgeführt wurde, stellt die vom Durchflusszähler gemessene Durchflussmenge an Schmutzwasser die wichtigste Größe dar, anhand derer die Steuerung der technischen Komponenten der Aufbereitungseinheit vorgenommen wird. Hinsichtlich der Flockungsstufe wird etwa die Dosierung des Flockungsmittels anhand der gemessenen Durchflussmenge vorgenommen.

Es kann aber auch vorgesehen sein, dass die Aufbereitungseinheit eine der Sedimentationsstufe nachgeordnete Druckerhöhungspumpe für eine der Sedimentationsstufe nachgeordnete Filterstufe umfasst, die mit der Steuerung verbunden ist und deren Steuerung anhand der gemessenen Durchflussmenge vorgenommen wird. Die Druckerhöhungspumpe ermöglicht es die Filterstufe optimal betreiben zu können. Mit der Filterstufe können im Überlauf der Sedimentationsstufe verbliebene Feststoffe entfernt werden. Die Zusammenstellung der Filterstufe kann variieren, vorzugsweise werden etwa Sandfilter und/oder Beutelfilter verwendet. Sand- und Beutelfilter sind einfach aufgebaute Filter, die zur Endfiltration bei sehr geringen Feststoffkonzentrationen eingesetzt werden können. Aber auch Ionentauscher, Aktivkohlefilter oder Vorrichtungen zur UV-Entkeimung können vorgesehen sein.

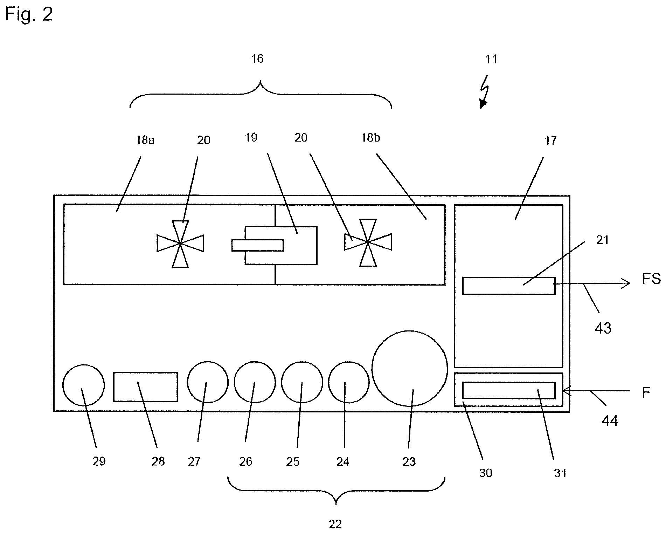

Des Weiteren wird vorgeschlagen, dass die als zweites Modul ausgeführte Schlammentwässerungseinheit eine quaderförmige Ummantelung aufweist. Die quaderförmige Ummantelung kann beispielsweise als Container ausgeführt sein, in dem die Komponenten der Schlammentwässerungseinheit angeordnet sind. Ein solcher Container ist leicht transportierbar und kann flexibel angeordnet werden. Die Schlammentwässerungseinheit kann mit ihrer quaderförmigen Umhüllung etwa auch auf einen Waggon eines Schienenfahrzeuges gestellt werden, wie in der Fig. 2 ersichtlich ist.

Für die Ausführung einer quaderförmigen Ummantelung wird auch vorgeschlagen, dass der erste Anschluss, der zweite Anschluss sowie der elektrische Anschluss an einer Außenwand der quaderförmigen Ummantelung angeordnet sind, was deren Zugänglichkeit als Schnittstellen erleichtert.

Zudem wird vorgeschlagen, dass ein Auffangbehälter für den abgetrennten Schlamm innerhalb der quaderförmigen Ummantelung vorgesehen ist, der zwischen dem Bandfilter und einer der Stirnflächen der quaderförmigen Ummantelung angeordnet ist, wobei die Stirnfläche eine Zugangstür aufweist. Die Stirnflächen der quaderförmigen Ummantelung sind jene Seitenflächen der quaderförmigen Ummantelung, die eine kürzere Seitenlänge aufweisen. Diese Anordnung erleichtert den Austausch des Auffangbehälters.

Der Austausch des Auffangbehälters wird zusätzlich erleichtert, indem der Auffangbehälter mittels aus- und einfahrbarer Schienen aus der quaderförmigen Ummantelung aus- und einfahrbar ist. Der Auffangbehälter kann daher aus der quaderförmigen Ummantelung ausgefahren werden und in weiterer Folge beispielsweise mit einem Gabelstapler abgehoben werden.

Die Erfindung wird in weiterer Folge anhand eines Ausführungsbeispiels mithilfe der beiliegenden Figuren näher erläutert. Es zeigen hierbei die
Fig. 1 eine schematische Darstellung einer Ausführungsform einer möglichen Anwendung einer Aufbereitungseinheit gemäß dem Stand der Technik von oben gesehen,
Fig. 2 eine schematische Darstellung einer Ausführungsform einer Aufbereitungseinheit gemäß dem Stand der Technik, und die
Fig. 3 eine schematische Darstellung einer erfindungsgemäßen Schlammentwässerungseinheit.

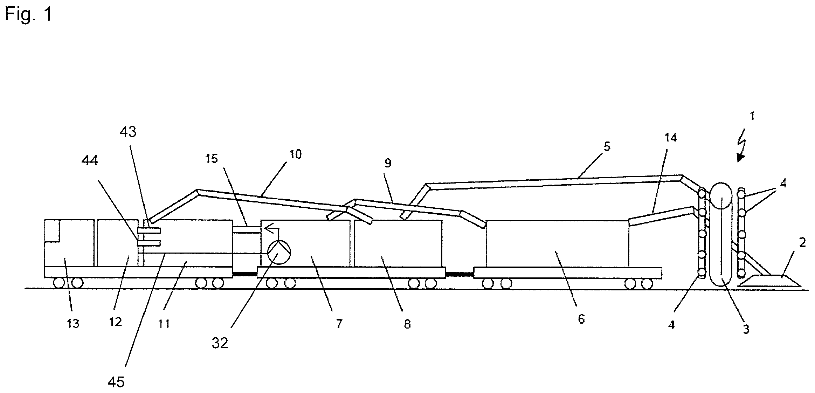

Zunächst wird auf die Fig. 1 Bezug genommen, die eine schematische Darstellung einer möglichen Anwendung einer Aufbereitungseinheit gemäß dem Stand der Technik zeigt, nämlich im Rahmen eines Reinigungsfahrzeuges zur Tunnelreinigung mit einem Fahrantrieb 13, einem Klarwasserbehälter 8, und einer mit dem Klarwasserbehälter 8 über Zuleitungen 5 verbundenen Reinigungseinheit 1 mit rotierenden Reinigungsbürsten 3 und an Sprühbalken angeordneten Reinigungsdüsen 4 zur Abgabe des Klarwassers als Waschflüssigkeit. Die Zuleitungen 5 sind dabei als flexible Schlauchleitungen ausgeführt, die an einem Träger zur Befestigung der Reinigungseinheit 1 am Reinigungsfahrzeug verlaufen. Die Waschflüssigkeit wird über Hochdruckpumpen der Reinigungseinheit 1 unter Druck gegen die Tunnelinnenwand gesprüht. Eine in Fahrtrichtung gesehen nach der Reinigungseinheit 1 angeordnete Absaughaube 2 ist Teil einer Absaugeinheit, die an einem mit Absaugleitungen 14 versehenen Träger gehalten ist, und über die Absaugleitungen 14 mit einem Sammelbehälter 6 verbunden ist, in dem abgesaugtes und verunreinigtes Schmutzwasser gesammelt wird. Der Sammelbehälter 6 ist über eine Verbindungsleitung 9 mit einem Vorlagebehälter 7 verbunden, und der Vorlagebehälter 7 über eine Zufuhrleitung 15 mit der Aufbereitungseinheit 11, wobei eine innerhalb des Vorlagebehälters 7 angeordnete Tauchpumpe 32 das Schmutzwasser über die Zufuhrleitung 15 autonom in die Aufbereitungseinheit 11 pumpt. Die Aufbereitungseinheit 11 ist wiederum mit einer Rückführungsleitung 10 für das gereinigte Klarwasser mit dem Klarwasserbehälter 8 verbunden. Die Verbindungsleitung 9, die Zufuhrleitung 15 sowie die Rückführungsleitung 10 sind ebenfalls als flexible Schlauchleitungen ausgeführt. In der gezeigten Ausführungsform ist das Reinigungsfahrzeug ferner als Schienenfahrzeug ausgeführt, bei dem alle Behälter sowie die Aufbereitungseinheit 11 und die Schlammentwässerungseinheit 12 auf Waggons angeordnet sind, wie in der Fig. 1 schematisch dargestellt ist.

Wie bereits erwähnt wurde, wird das abgesaugte und verunreinigte Schmutzwasser von der Absaughaube 2 über die Absaugleitungen 14 zunächst in den Sammelbehälter 6 geleitet. Im Sammelbehälter 6 findet eine Grobtrennung statt, indem sich Feststoffe absetzen, die schwerer als Wasser sind. Das Überlaufwasser des Sammelbehälters 6 wird über die Verbindungsleitung 9 in den Vorlagebehälter 7 für die nachfolgende Aufbereitungseinheit 11 gepumpt.

Der Vorlagebehälter 7 ist über eine Zufuhrleitung 15 mit der Aufbereitungseinheit 11 verbunden, die eine Flockungsstufe 16 und einer der Flockungsstufe 16 nachgeordnete Sedimentationsstufe 17 umfasst, wie in weiterer Folge anhand der Fig. 2 erläutert wird. Die Fig. 2 zeigt dabei eine schematische Darstellung einer Ausführungsform einer Aufbereitungseinheit 11 gemäß dem Stand der Technik. Die Flockungsstufe 16 wird von einem Flockungsbehälter 18 und einer Flockungsmittelzufuhr 19 mit entsprechenden Rührwerken 20 gebildet, und dient der Entfernung kolloidaler Feststoffe aus dem Schmutzwasser. Der Flockungsbehälter 18 ist hierfür an seinem Einlauf mit dem Vorlagebehälter 7 verbunden, und an seinem Auslauf mit der Sedimentationsstufe 17 und kann in ein einlaufseitiges Reaktorbecken 18a, in dem vorwiegend eine gute Durchmischung des aufzubereitenden Schmutzwassers mit dem Flockungsmittel erreicht werden soll, und ein auslaufseitiges Konsolidierungsbecken 18b, in dem vorwiegend die Bildung absetzfähiger Flocken erreicht werden soll, unterteilt werden. Als Flockungsmittel wird vorzugsweise ein Breitbandflockungsmittel verwendet, da die genaue Zusammensetzung der Verunreinigungen im Schmutzwasser zumeist nicht bekannt ist.

Die nachfolgende Sedimentationsstufe 17 dient der Sedimentation der in der Flockungsstufe 16 gebildeten Flocken und ist vorzugsweise als Lamellenklärer ausgeführt. Im Bodenbereich der Sedimentationsstufe 17 ist eine Schlammaustragpumpe 21 angeordnet, um den abgesetzten Flüssigschlamm FS zu entfernen. Das gereinigte Klarwasser aus der Sedimentationsstufe 17 wird in weiterer Folge einem Vorlagebecken 30 mit einer Druckerhöhungspumpe 31 für eine nachfolgende Filterstufe 22 zugeführt. Die Filterstufe 22 dient der Endfiltration und umfasst im gezeigten Ausführungsbeispiel der Fig. 2 einen Sandfilter 23, einen Beutelfilter 24, einen Ionentauscher 25 und einen Aktivkohlefilter 26. Die Auswahl und Abfolge der Filter der Filterstufe 22 kann freilich variieren. Im Ausführungsbeispiel der Fig. 2 sind ferner eine Vorrichtung zu UV-Entkeimung 27 gezeigt, sowie eine Einrichtung zur pH-Neutralisierung 29, da die Flockungsstufe 16 eine Verschiebung des pH-Wertes verursacht, die den anschließenden Reinigungsprozess sowie nachfolgende Anlagenteile wie Pumpen und Düsen beeinträchtigen kann. Schließlich ist eine Steuerung 28 vorgesehen, um Betriebsparameter der Behälter, Pumpen und Düsen darzustellen und gegebenenfalls verändern zu können und somit den gesamten Reinigungsvorgang zu überwachen und zu steuern. Das gereinigte Klarwasser wird schließlich von der Einrichtung zur pH-Neutralisierung 29 über die Rückführungsleitung 10 in den Klarwasserbehälter 8 gepumpt.

In der Fig. 2 ist schematisch ferner eine bauliche Verwirklichung der Aufbereitungseinheit 11 gezeigt, bei der die Aufbereitungseinheit 11 als erstes Modul ausgeführt ist und eine quaderförmige Ummantelung aufweist, wobei sich die Flockungsstufe 16 entlang einer inneren Längsseite der Ummantelung innerhalb einer ersten Quaderhälfte erstreckt, und sich die Sedimentationsstufe 17 entlang einer inneren Breitseite der Ummantelung erstreckt. Die Filterstufe 22 ist entlang einer inneren Längsseite der Ummantelung innerhalb einer zweiten Quaderhälfte angeordnet, sodass der quaderförmige Innenraum der Aufbereitungseinheit 11 optimal genutzt wird und Schmutzwasser und Klarwasser auf derselben Seite der Aufbereitungseinheit 11 zugeführt bzw. abgeführt werden.

Wie bereits erwähnt wurde verfügt das Überlaufwasser der der Flockungsstufe 16 nachgeordneten Sedimentationsstufe 17 bereits über die erforderliche Reinheit, um in den Klarwasserbehälter 8 der Reinigungseinheit 1 gepumpt werden zu können und mit den Hochdruckpumpen und -düsen der Reinigungseinheit 1 verwendet werden zu können.

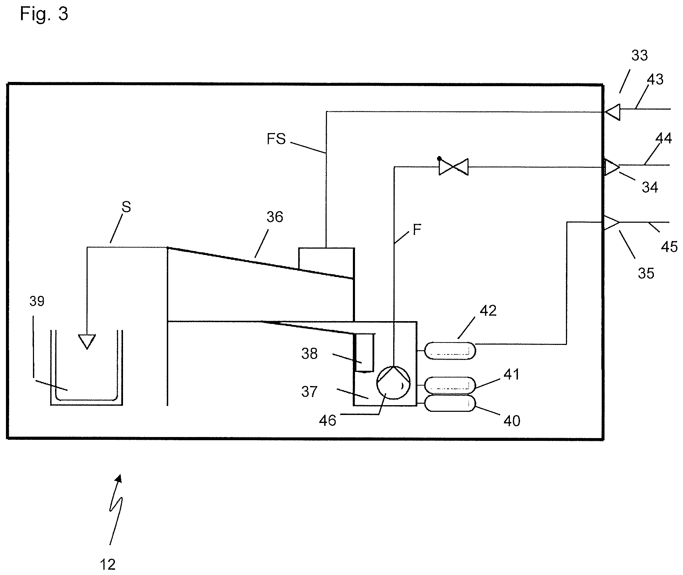

Um auch den von der Schlammaustragpumpe 21 ausgetragenen Flüssigschlamm FS einer Aufbereitung zuzuführen ist eine zusätzliche Schlammentwässerungseinheit 12 vorgesehen. Eine mögliche Ausführungsform einer solchen Schlammentwässerungseinheit 12 gemäß der Erfindung wird anhand der Fig. 3 erläutert. Die Schlammentwässerungseinheit 12 ist als zweites Modul mit einer quaderförmigen Ummantelung etwa in Form eines Containers ausgeführt. Innerhalb der quaderförmigen Ummantelung ist ein Bandfilter 36 angeordnet, der vorzugsweise als Schrägbettfilter ausgeführt ist. Ein Schrägbettfilter arbeitet vollautomatisch und besteht aus einem Gehäuse mit einem schräg angeordneten Vlies. Der von der Schlammaustragpumpe 21 ausgetragene Flüssigschlamm FS wird über eine Schlammleitung 43 von der Aufbereitungseinheit 11 über einen ersten Anschluss 33 der Schlammentwässerungseinheit 12 dem Bandfilter 36 zugeführt, wo der Flüssigschlamm FS über einen Einlaufverteiler in einen Filterraum gelangt und ein Vlies mit einer Porengröße von beispielsweise 60µm durchfließt. Feststoffe verbleiben als Filterkuchen auf dem Vlies. Sensoren messen die Filterkuchenhöhe und aktivieren in herkömmlicher Weise bei Erreichen einer Maximalhöhe eine Vorschubbewegung für das Vlies. Über einen Abstreifer wird der Filterkuchen vom Vlies abgelöst und als stichfester Schlamm S in einen Auffangbehälter 39 ausgeworfen. Der Wasseranteil wird als Filtrat F in einem darunter liegenden Filtrataufnahmebehälter 37 gesammelt, wobei ein Beutelfilter 38 für eine zusätzliche Filterung des Filtrats F vorgesehen sein kann.

Der Filtrataufnahmebehälter 37 ist im gezeigten Ausführungsbeispiel mit drei Füllstandssensoren 40, 41, 42 versehen. Mithilfe eines ersten Füllstandssensors 40 wird eine innerhalb des Filtrataufnahmebehälters 37 angeordnete Filtratpumpe 46 bei Unterschreiten eines untersten Füllstandes ausgeschaltet. Durch das Ausschalten wird ein Leerlauf der Filtratpumpe 46 vermieden. Mithilfe eines zweiten Füllstandssensors 41 wird die Filtratpumpe 46 bei Überschreiten eines mittleren Füllstandes eingeschaltet. Durch das Einschalten wird das Filtrat F über den zweiten Anschluss 34 und eine Filtratleitung 44 in die Aufbereitungseinheit 11 gepumpt. Falls unerwartet hohe Mengen an Flüssigschlamm FS mit entsprechend hohen Wassermengen anfallen und in die Schlammentwässerungseinheit 12 gepumpt werden, wird mithilfe eines dritten Füllstandssensors 42 und eines entsprechenden Schaltrelais bei Überschreiten eines obersten Füllstandes die Stromversorgung der Tauchpumpe 32 ausgeschaltet und bei Unterschreiten des untersten Füllstandes die Stromversorgung der Tauchpumpe 32 wieder eingeschaltet. Hierfür ist der dritte Füllstandssensor 42 über einen elektrischen Anschluss 35 und eine elektrische Leitung 45 mit der Stromversorgung der Tauchpumpe 32 verbunden.

Der erste Anschluss 33, der zweite Anschluss 34 sowie der elektrische Anschluss 35 sind an einer Außenwand der quaderförmigen Ummantelung angeordnet, um deren Zugänglichkeit als Schnittstellen zu erleichtern. Der Auffangbehälter 39 für den abgetrennten Schlamm S ist innerhalb der quaderförmigen Ummantelung zwischen dem Bandfilter 36 und einer der Stirnflächen der quaderförmigen Ummantelung angeordnet, wobei die Stirnfläche eine Zugangstür aufweist. Über diese Zugangstür kann der Auffangbehälter 39 ausgetauscht werden. Der Austausch des Auffangbehälters 39 kann zusätzlich erleichtert werden, indem der Auffangbehälter 39 mittels aus- und einfahrbarer Schienen aus der quaderförmigen Ummantelung aus- und einfahrbar ist. Der Auffangbehälter 39 kann daher aus der quaderförmigen Ummantelung ausgefahren werden und in weiterer Folge beispielsweise mit einem Gabelstapler abgehoben werden.

Bei Anwendungen, die einer Schlammentwässerung bedürfen, wird die Schlammentwässerungseinheit 12 einfach an die Aufbereitungseinheit 11 gekoppelt, indem der erste Anschluss 33 mit der Schlammaustragpumpe 21 verbunden wird, der zweite Anschluss 34 mit dem Vorlagebecken 30 für den Überlauf der Sedimentationsstufe 17, und der elektrische Anschluss 35 mit der Stromversorgung der Tauchpumpe 32. Die Stromversorgung der Schlammentwässerungseinheit 12 kann ebenfalls über den elektrischen Anschluss 35 erfolgen. Die Schlammaustragpumpe 21 arbeitet in der Regel autonom, indem sie sich bei anfallendem Flüssigschlamm FS selbsttätig einschaltet und bei fehlendem Flüssigschlamm FS selbsttätig ausschaltet. Auch der Bandfilter 36 arbeitet autonom. Das Filtrat F wird in die Aufbereitungseinheit 11 rückgeführt, wobei auch die Rückführung mithilfe der Füllstandssensoren 40, 41, 42 autonom vorgenommen wird.

Sobald sich Schmutzwasser in ausreichender Menge im Vorlagebehälter 7 befindet, schaltet sich die Tauchpumpe 32 selbsttätig ein und pumpt das Schmutzwasser in die Aufbereitungseinheit 11. Ein Durchflusszähler der Aufbereitungseinheit 11 registriert das eingepumpte Schmutzwasser und aktiviert die Steuerung 28, die eine auf den gemessenen Durchfluss abgestimmte Dosierung des Flockungsmittels in die Flockungsstufe 16 vornimmt und die Druckerhöhungspumpe 31 aktiviert. Sobald eine Mindestmenge an Flüssigschlamm FS in der Sedimentationsstufe 17 angefallen ist, aktiviert sich die Schlammaustragpumpe 21 selbsttätig und pumpt Flüssigschlamm FS in die Schlammentwässerungseinheit 12. Sobald ausreichende Mengen an Filtrat F im Filtrataufnahmebehälter 37 gesammelt wurden, wird über den zweiten Füllstandssensor 41 die Filtratpumpe 46 eingeschaltet, und Filtrat F in den Überlauf der Sedimentationsstufe 17 gepumpt. Diese autonom arbeitende Aufbereitung von Flüssigschlamm FS funktioniert auch bei einem variierenden und an sich unbekannten Schlammanteil.

Die Erfindung bietet somit eine Vorrichtung zur Aufbereitung von Flüssigschlamm FS, die in bekannte Vorrichtungen zur Abwasseraufbereitung integrierbar ist und nach einer anfänglichen Konfigurierung und Installierung am Einsatzort autonom eine Schlammentwässerung vornimmt, ohne dass es dabei abgesehen von einem Ein- und Ausschalten der Vorrichtung eines externen Eingriffs zur Steuerung oder Regelung der Anlage durch Bedienpersonal bedarf. Mithilfe der erfindungsgemäßen Schlammentwässerungseinheit 12 kann in Kombination mit der Aufbereitungseinheit 11 99% des Schmutzwassers als Klarwasser wiedergewonnen werden, und nur 1% verbleibt als stichfester Schlamm S. Das Schmutzwasser kann am Einsatzort somit zu 99% als Prozesswasser wiederverwendet werden, was nicht nur Wasser spart, was in ökologischer und ökonomischer Hinsicht vorteilhaft ist, sondern auch die Entsorgungsproblematik beseitigt.

**Bezugszeichenliste:**

| | | | |
|---|---|---|---|
| 1 | Reinigungseinheit | 35 | elektrischer Anschluss |
| 2 | Absaughaube | 36 | Bandfilter |
| 3 | Reinigungsbürsten | 37 | Filtrataufnahmebehälter |
| 4 | Reinigungsdüsen | 38 | Beutelfilter |
| 5 | Zuleitungen | 39 | Auffangbehälter |
| 6 | Sammelbehälter | 40 | erster Füllstandssensor |
| 7 | Vorlagebehälter | 41 | zweiter Füllstandssensor |
| 8 | Klarbehälter | 42 | dritter Füllstandssensor |
| 9 | Verbindungsleitung | 43 | Schlammleitung |
| 10 | Rückführungsleitung | 44 | Filtratleitung |
| 11 | Aufbereitungseinheit | 45 | elektrische Leitung |
| 12 | Schlammentwässerungseinheit | 46 | Filtratpumpe |
| 13 | Fahrantrieb | | |
| 14 | Absaugleitung | FS | Flüssigschlamm |
| 15 | Zufuhrleitung | F | Filtrat |
| 16 | Flockungsstufe | S | Schlamm |
| 17 | Sedimentationsstufe | | |
| 18 | Flockungsbehälter | | |
| 19 | Flockungsmittelzufuhr | | |
| 20 | Rührwerke | | |
| 21 | Schlammaustragpumpe | | |
| 22 | Filterstufe | | |
| 23 | Sandfilter | | |
| 24 | Beutelfilter | | |
| 25 | Ionentauscher | | |
| 26 | Aktivkohlefilter | | |
| 27 | Vorrichtung zur UV-Entkeimung | | |
| 28 | Steuerung | | |
| 29 | Einrichtung zur pH-Neutralisierung | | |
| 30 | Vorlagebecken | | |
| 31 | Druckerhöhungspumpe | | |
| 32 | Tauchpumpe | | |
| 33 | erster Anschluss | | |
| 34 | zweiter Anschluss | | |

## Patentansprüche

1. Mobile Abwasseraufbereitungsvorrichtung mit einem als Vorlagebehälter (7) ausgeführten Schmutzwasserbehälter für aufzubereitendes Schmutzwasser, einer als erstes Modul ausgeführten Aufbereitungseinheit (11) für das Schmutzwasser, die eine Flockungsstufe (16) und eine der Flockungsstufe (16) nachgeordnete Sedimentationsstufe (17) umfasst, und einen Klarwasserbehälter (8) für das aufbereitete Klarwasser, wobei der Vorlagebehälter (7) über eine mit einer Tauchpumpe (32) versehene Zufuhrleitung (15) zur Zufuhr des Schmutzwassers mit der Aufbereitungseinheit (11) verbunden ist, und die Aufbereitungseinheit (11) über eine Rückführungsleitung (10) zur Rückführung von aufbereitetem Klarwasser mit dem Klarwasserbehälter (8) verbunden ist, **dadurch gekennzeichnet, dass** eine als zweites Modul ausgeführte Schlammentwässerungseinheit (12) vorgesehen ist, die einen Bandfilter (36) zur Abtrennung von Schlamm (S) sowie einen Filtrataufnahmebehälter (37) für das Filtrat (F) des Bandfilters (36) umfasst, und die einen ersten Anschluss (33) für eine mit einer Schlammaustragpumpe (21) der Sedimentationsstufe (17) der Aufbereitungseinheit (11) verbindbare Schlammleitung (43) aufweist, sowie einen zweiten Anschluss (34) für eine mit einem Überlauf der Sedimentationsstufe (17) der Aufbereitungseinheit (11) verbindbare Filtratleitung (44), sowie einen elektrischen Anschluss (35) für eine mit der Stromversorgung der Tauchpumpe (32) des Vorlagebehälters (7) verbindbare elektrische Leitung (45), wobei der Filtrataufnahmebehälter (37) mit Füllstandssensoren (40, 41, 42) zur Überwachung eines untersten, eines mittleren und eines obersten Füllstandes im Filtrataufnahmebehälter (37) versehen ist, mit denen eine im Filtrataufnahmebehälter (37) angeordnete und mit dem zweiten Anschluss (34) verbundene Filtratpumpe (46) bei Unterschreiten des untersten Füllstandes ausschaltbar ist und bei Überschreiten des mittleren Füllstandes einschaltbar ist, und mit denen bei Überschreiten eines obersten Füllstandes die Stromversorgung der Tauchpumpe (32) ausschaltbar sowie bei Unterschreiten des untersten Füllstandes die Stromversorgung der Tauchpumpe (32) einschaltbar ist.

2. Mobile Abwasseraufbereitungsvorrichtung nach Anspruch 1, **dadurch gekennzeichnet, dass** die Tauchpumpe (32) als autonome Tauchpumpe (32) ausgeführt ist.

3. Mobile Abwasseraufbereitungsvorrichtung nach Anspruch 1 oder 2, **dadurch gekennzeichnet, dass** der Bandfilter (36) als Schrägbettfilter ausgeführt ist.

4. Mobile Abwasseraufbereitungsvorrichtung nach einem der Ansprüche 1 bis 3, **dadurch gekennzeichnet, dass** die Aufbereitungseinheit (11) einen Durchflusszähler für das über die Zufuhrleitung (15) zugeführte und aufzubereitende Schmutzwasser aufweist, der mit einer Steuerung (28) für die Flockungsstufe (16) verbunden ist.

5. Mobile Abwasseraufbereitungsvorrichtung nach Anspruch 4, **dadurch gekennzeichnet, dass** die Aufbereitungseinheit (11) eine der Sedimentationsstufe (17) nachgeordnete Druckerhöhungspumpe (31) für eine der Sedimentationsstufe (17) nachgeordnete Filterstufe (22) umfasst, die mit der Steuerung (28) verbunden ist.

6. Mobile Abwasseraufbereitungsvorrichtung nach einem der Ansprüche 1 bis 5, **dadurch gekennzeichnet, dass** die als zweites Modul ausgeführte Schlammentwässerungseinheit (12) eine quaderförmige Ummantelung aufweist.

7. Mobile Abwasseraufbereitungsvorrichtung nach Anspruch 6, **dadurch gekennzeichnet, dass** der erste Anschluss (33), der zweite Anschluss (34) sowie der elektrische Anschluss (35) an einer Außenwand der quaderförmigen Ummantelung angeordnet sind.

8. Mobile Abwasseraufbereitungsvorrichtung nach Anspruch 6 oder 7, **dadurch gekennzeichnet, dass** ein Auffangbehälter (39) für den abgetrennten Schlamm (S) innerhalb der quaderförmigen Ummantelung vorgesehen ist, der zwischen dem Bandfilter (36) und einer der Stirnflächen der quaderförmigen Ummantelung angeordnet ist, wobei die Stirnfläche eine Zugangstür aufweist.

9. Mobile Abwasseraufbereitungsvorrichtung nach Anspruch 8, **dadurch gekennzeichnet, dass** der Auffangbehälter (39) mittels aus- und einfahrbarer Schienen aus der quaderförmigen Ummantelung aus- und einfahrbar ist.

## Claims

1. Mobile wastewater treatment device with a dirty water tank designed as a storage tank (7) for dirty water to be treated, a treatment unit (11) designed as a first module for the dirty water, which comprises a flocculation stage (16) and a sedimentation stage (17) downstream of the flocculation stage (16), and a clear water tank (8) for the treated clear water, wherein the storage tank (7) is connected to the treatment unit (11) via a supply line (15) provided with a submersible pump (32) for supplying the dirty water, and the treatment unit (11) is connected to the clear water tank (8) via a return line (10) for returning treated clear water, **characterized in that** a sludge dewatering unit (12) designed as a second module is provided, which comprises a belt filter (36) for separating sludge (S) and a filtrate receiving tank (37) for the filtrate (F) of the belt filter (36), and which has a first connection (33) for a sludge line (43) connectable to a sludge discharge pump (21) of the sedimentation stage (17) of the treatment unit (11), as well as a second connection (34) for a filtrate line (44) connectable to an overflow of the sedimentation stage (17) of the treatment unit (11), as well as an electrical connection (35) for an electrical line (45) connectable to the power supply of the submersible pump (32) of the storage tank (7), wherein the filtrate receiving tank (37) is provided with fill level sensors (40, 41, 42) for monitoring a lowest, a middle and a highest fill level in the filtrate receiving tank (37), with which a filtrate pump (46) arranged in the filtrate receiving tank (37) and connected to the second connection (34) can be switched off when the lowest filling level is undershot and switched on when the middle filling level is exceeded, and with which the power supply of the submersible pump (32) can be switched off when a top filling level is exceeded and the power supply of the submersible pump (32) can be switched on when the bottom filling level is undershot.

2. Mobile wastewater treatment device according to claim 1, **characterized in that** the submersible pump (32) is designed as an autonomous submersible pump (32).

3. Mobile wastewater treatment device according to claim 1 or 2, **characterized in that** the belt filter (36) is designed as an inclined bed filter.

4. Mobile wastewater treatment device according to one of claims 1 to 3, **characterized in that** the treatment unit (11) has a flow meter for the wastewater supplied via the supply line (15) and to be treated, which flow meter is connected to a control (28) for the flocculation stage (16).

5. Mobile wastewater treatment device according to claim 4, **characterized in that** the treatment unit (11) comprises a pressure booster pump (31) arranged downstream of the sedimentation stage (17) for a filter stage (22) arranged downstream of the sedimentation stage (17), which is connected to the control system (28).

6. Mobile wastewater treatment device according to one of claims 1 to 5, **characterized in that** the sludge dewatering unit (12) designed as a second module has a cuboid casing.

7. Mobile wastewater treatment device according to claim 6, **characterized in that** the first connection (33), the second connection (34) and the electrical connection (35) are arranged on an outer wall of the cuboid casing.

8. Mobile wastewater treatment device according to claim 6 or 7, **characterized in that** a collecting container (39) for the separated sludge (S) is provided within the cuboid casing, which is arranged between the belt filter (36) and one of the end faces of the cuboid casing, wherein the end face has an access door.

9. Mobile wastewater treatment device according to claim 8, **characterized in that** the collecting container (39) can be extended and retracted from the cuboid casing by means of extendable and retractable rails.

## Revendications

1. Dispositif mobile de retraitement des eaux usées avec un réservoir d'eau sale réalisé comme un réservoir collecteur (7) pour de l'eau sale à traiter, une unité de retraitement (11) pour l'eau sale réalisée comme un premier module, qui comprend un étage de floculation (16) et un étage de sédimentation (17) en aval de l'étage de floculation (16), et un réservoir d'eau claire (8) pour l'eau claire traitée, dans lequel le réservoir collecteur (7) communique avec l'unité de retraitement (11) via une conduite d'alimentation (15) munie d'une pompe submersible (32) pour amener l'eau sale et l'unité de retraitement (11) communique avec le réservoir d'eau claire (8) via une conduite de renvoi (10) pour le renvoi d'eau claire traitée, **caractérisé en ce qu'**il est prévu une unité de déshydratation des boues (12) réalisée comme un deuxième module, qui comprend un filtre à bande (36) pour la séparation de boues (S) et un collecteur de produit de filtration (37) pour le produit de filtration (F) du filtre à bande (36), et qui comporte un premier raccord (33) pour une conduite de boues (43) pouvant être raccordée à une pompe d'extraction des boues (21) de l'étage de sédimentation (17) de l'unité de retraitement (11), ainsi qu'un deuxième raccord (34) pour une conduite de produit de filtration (44) pouvant être mise en communication avec un trop-plein de l'étage de sédimentation (17) de l'unité de retraitement (11), ainsi qu'un branchement électrique (35) pour une ligne électrique (45) pouvant être raccordée à une alimentation électrique de la pompe submersible (32) du réservoir collecteur (7), le collecteur de produit de filtration (37) étant muni de capteurs de niveau de remplissage (40, 41, 42) pour la surveillance de niveaux de remplissage inférieur, moyen et supérieur dans le collecteur de produit de filtration (37), avec lesquels une pompe à produit de filtration (46) disposée dans le collecteur de produit de filtration (37) et raccordée au deuxième raccord (34) peut être arrêtée si le niveau de remplissage n'atteint pas le niveau de remplissage inférieur et peut être démarrée s'il dépasse le niveau de remplissage moyen, et avec lesquels l'alimentation électrique de la pompe submersible (32) peut être coupée si un niveau de remplissage supérieur est dépassé et l'alimentation électrique de la pompe submersible (32) peut être établie si le niveau de remplissage n'atteint pas le niveau de remplissage inférieur.

2. Dispositif mobile de retraitement des eaux usées selon la revendication 1, **caractérisé en ce que** la pompe submersible (32) est réalisée comme une pompe submersible (32) autonome.

3. Dispositif mobile de retraitement des eaux usées selon la revendication 1 ou 2, **caractérisé en ce que** le filtre à bande (36) est réalisé comme un filtre à lit incliné.

4. Dispositif mobile de retraitement des eaux usées selon l'une des revendications 1 à 3, **caractérisé en ce que** l'unité de retraitement (11) comporte un débitmètre pour l'eau sale à traiter amenée via la conduite d'arrivée (15), qui est connecté à une unité de commande (28) pour l'étage de floculation (16).

5. Dispositif mobile de retraitement des eaux usées selon la revendication 4, **caractérisé en ce que** l'unité de retraitement (11) comprend une pompe de surpression (31) montée en aval de l'étage de sédimentation (17) pour un étage de filtration (22) monté en aval de l'étage de sédimentation (17), qui est connectée à l'unité de commande (28).

6. Dispositif mobile de retraitement des eaux usées selon l'une des revendications 1 à 5, **caractérisé en ce que** l'unité de déshydratation des boues (12) réalisée comme un deuxième module comporte un habillage quadrangulaire.

7. Dispositif mobile de retraitement des eaux usées selon la revendication 6, **caractérisé en ce que** le premier raccord (33), le deuxième raccord (34) et le branchement électrique (35) sont disposés sur une paroi extérieure de l'habillage quadrangulaire.

8. Dispositif mobile de retraitement des eaux usées selon la revendication 6 ou 7, **caractérisé en ce qu'**un collecteur (39) pour les boues (S) séparées est prévu à l'intérieur de l'habillage quadrangulaire et disposé entre le filtre à bande (36) et une des faces d'extrémité de l'habillage quadrangulaire, laquelle face d'extrémité présente une porte d'accès.

9. Dispositif mobile de retraitement des eaux usées selon la revendication 8, **caractérisé en ce que** le collecteur (39) peut être sorti de l'habillage quadrangulaire et rentré à l'aide de rails extensibles et rétractables.
